(19) Europäisches Patentamt
European Patent Office
Office européen des brevets

(11) EP 4 589 406 A1

(12) EUROPEAN PATENT APPLICATION
published in accordance with Art. 153(4) EPC

(43) Date of publication:
**23.07.2025 Bulletin 2025/30**

(21) Application number: **23865230.9**

(22) Date of filing: **25.08.2023**

(51) International Patent Classification (IPC):
***G06F 1/20*** *(2006.01)* ***G06F 1/16*** *(2006.01)*
***H04M 1/72409*** *(2021.01)* ***H04M 1/72454*** *(2021.01)*
***H05K 7/20*** *(2006.01)*

(52) Cooperative Patent Classification (CPC):
**G06F 1/16; G06F 1/20; H04M 1/72409; H04M 1/72454; H05K 7/20**

(86) International application number:
**PCT/JP2023/030638**

(87) International publication number:
**WO 2024/057873 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.09.2022 JP 2022144299**

(71) Applicant: **Sony Group Corporation**
**Tokyo 108-0075 (JP)**

(72) Inventors:
- **KATAGIRI, Yoichi**
  **Tokyo 108-0075 (JP)**
- **FUJII, Reiju**
  **Tokyo 108-0075 (JP)**
- **KOKUBO, Masashi**
  **Tokyo 108-0075 (JP)**

(74) Representative: **D Young & Co LLP**
**3 Noble Street**
**London EC2V 7BQ (GB)**

# (54) INFORMATION PROCESSING DEVICE, INFORMATION PROCESSING METHOD, AND PROGRAM

(57) An information processing apparatus is an information processing apparatus including a fan unit having an air cooling fan, and includes a control unit. The control unit controls a rotation speed of the air cooling fan based on at least a temperature and power consumption of the information processing apparatus.

EP 4 589 406 A1

FIG.3

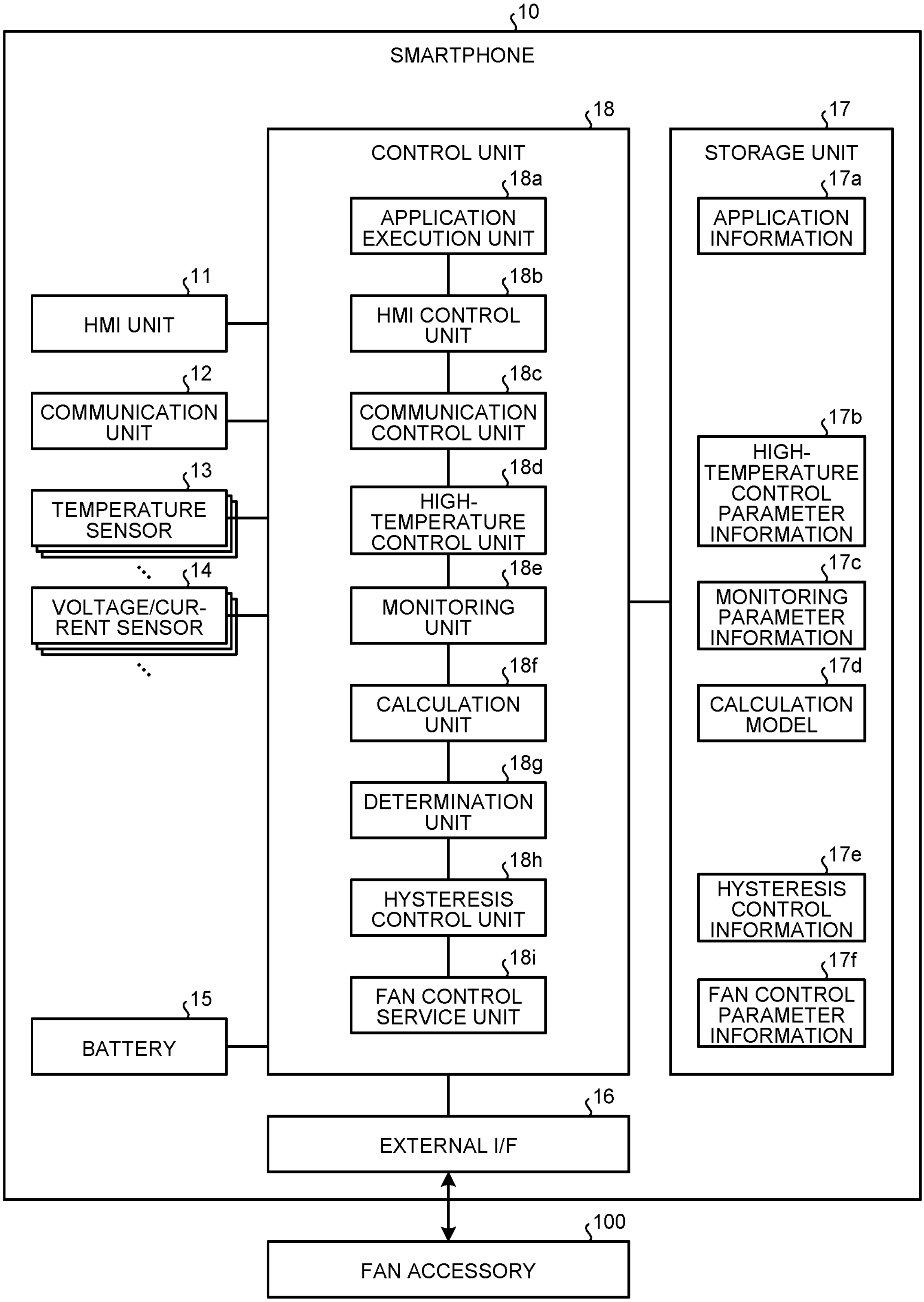
10
SMARTPHONE
18
CONTROL UNIT
18a
APPLICATION EXECUTION UNIT
18b
HMI CONTROL UNIT
18c
COMMUNICATION CONTROL UNIT
18d
HIGH-TEMPERATURE CONTROL UNIT
18e
MONITORING UNIT
18f
CALCULATION UNIT
18g
DETERMINATION UNIT
18h
HYSTERESIS CONTROL UNIT
18i
FAN CONTROL SERVICE UNIT
17
STORAGE UNIT
17a
APPLICATION INFORMATION
17b
HIGH-TEMPERATURE CONTROL PARAMETER INFORMATION
17c
MONITORING PARAMETER INFORMATION
17d
CALCULATION MODEL
17e
HYSTERESIS CONTROL INFORMATION
17f
FAN CONTROL PARAMETER INFORMATION
11
HMI UNIT
12
COMMUNICATION UNIT
13
TEMPERATURE SENSOR
14
VOLTAGE/CURRENT SENSOR
15
BATTERY
16
EXTERNAL I/F
100
FAN ACCESSORY

## Description

Field

The present disclosure relates to an information processing apparatus, an information processing method, and a program.

Background

Conventionally, as a cooling structure of an information processing apparatus such as a notebook personal computer (PC), technology has been proposed in which an air cooling fan is built in an apparatus main body, and a rotation speed of the air cooling fan is controlled based on a temperature of a heating element such as a central processing unit (CPU) (see, for example, Patent Literature 1).

Citation List

Patent Literature

Patent Literature 1: JP 2012-227258 A

Summary

Technical Problem

However, the conventional technology described above has room for further improvement in order to further improve cooling efficiency.

In recent years, among information processing apparatuses, portable information processing apparatuses such as a smartphone and a tablet terminal have been remarkably spread. In addition, performance of these portable information processing apparatuses has also been rapidly improved, and for example, models including a chip having a high processing capability and a high-resolution camera have become mainstream.

A user can easily enjoy various game applications such as Third-person shooter (TPS) and Massively Multiplayer Online Role-Playing Game (MMORPG), long-time moving image shooting by a camera application, and the like using these information processing apparatuses.

However, such a use case has a problem that the main body of the information processing apparatus tends to have a high temperature due to heat generation by a high load. In particular, since a portable information processing apparatus is often used in a state where the user directly holds the apparatus main body by hands, it is desirable to further improve cooling efficiency.

Accordingly, the present disclosure proposes an information processing apparatus, an information processing method, and a program capable of further improving cooling efficiency.

Solution to Problem

In order to solve the above problems, one aspect of an information processing apparatus according to the present disclosure is an information processing apparatus including a fan unit having an air cooling fan, and includes a control unit. The control unit controls a rotation speed of the air cooling fan based on at least a temperature and power consumption of the information processing apparatus.

Brief Description of Drawings

FIG. 1 is a (first) schematic explanatory diagram of an information processing method according to an embodiment of the present disclosure.

FIG. 2 is a (second) schematic explanatory diagram of the information processing method according to the embodiment of the present disclosure.

FIG. 3 is a block diagram illustrating a configuration example of a smartphone according to the embodiment of the present disclosure.

FIG. 4 is an (first) explanatory diagram of high-temperature control processing according to the embodiment of the present disclosure.

FIG. 5 is an (second) explanatory diagram of the high-temperature control processing according to the embodiment of the present disclosure.

FIG. 6 is a block diagram illustrating a configuration example of a monitoring unit according to the embodiment of the present disclosure.

FIG. 7 is an (first) explanatory diagram of calculation processing according to the embodiment of the present disclosure.

FIG. 8 is an (second) explanatory diagram of the calculation processing according to the embodiment of the present disclosure.

FIG. 9 is an (third) explanatory diagram of the calculation processing according to the embodiment of the present disclosure.

FIG. 10 is an (fourth) explanatory diagram of the calculation processing according to the embodiment of the present disclosure.

FIG. 11 is an (fifth) explanatory diagram of the calculation processing according to the embodiment of the present disclosure.

FIG. 12 is an (sixth) explanatory diagram of the calculation processing according to the embodiment of the present disclosure.

FIG. 13 is a block diagram illustrating a configuration example of a fan accessory according to the embodiment of the present disclosure.

FIG. 14 is a flowchart illustrating a processing procedure executed by the smartphone according to the embodiment of the present disclosure.

FIG. 15 is a flowchart illustrating a processing procedure of hysteresis control processing illustrated in FIG. 14.

FIG. 16 is an (first) explanatory diagram of a modification.

FIG. 17 is an (second) explanatory diagram of the modification.

FIG. 18 is an (third) explanatory diagram of the modification.

FIG. 19 is an (fourth) explanatory diagram of the modification.

FIG. 20 is an (fifth) explanatory diagram of the modification.

FIG. 21 is an (sixth) explanatory diagram of the modification.

FIG. 22 is a hardware configuration diagram illustrating an example of a computer that implements functions of the smartphone.

Description of Embodiments

Hereinafter, embodiments of the present disclosure will be described in detail based on the drawings. Note that, in the following embodiments, the same parts are denoted by the same reference numerals, and redundant description is omitted.

Hereinafter, a case where an information processing apparatus according to an embodiment (hereinafter, appropriately referred to as the "present embodiment") of the present disclosure is a smartphone 10 will be described as an example.

In addition, the present disclosure will be described according to the following item order.

1. Overview
2. Configuration of Smartphone
3. Configuration of Fan Accessory
4. Modifications
5. Hardware Configuration
6. Conclusion

<<1. Overview>>

FIG. 1 is a (first) schematic explanatory diagram of an information processing method according to the embodiment of the present disclosure. FIG. 2 is a (second) schematic explanatory diagram of the information processing method according to the embodiment of the present disclosure.

The information processing method according to the present embodiment is executed by the smartphone 10. The smartphone 10 according to the present embodiment includes a forced air cooling type cooling structure using a cooling fan. As illustrated in FIG. 1, the smartphone 10 is implemented by a fan accessory 100 that is detachably provided with the cooling structure. The fan accessory 100 corresponds to an example of a "fan unit".

The fan accessory 100 is provided so as to be mountable on a rear surface side where an out-camera or the like of the smartphone 10 is provided. The fan accessory 100 includes a fan 103 that is an air cooling fan. The fan 103 is provided at a center portion of the fan accessory 100. Note that the fan 103 is not limited to the center portion of the fan accessory 100, and may be provided, for example, at another position corresponding to a portion that is likely to be a heat source (such as a CPU) of the smartphone 10.

Further, the fan accessory 100 includes grip portions 106 on the left and right sides. When the fan accessory 100 is mounted, a user can enjoy various applications started on the smartphone 10 while holding the grip portions 106 by hands.

Incidentally, a recent portable information processing apparatus such as the smartphone 10 is improved in performance, and can execute various applications with a high load such as game applications such as TPS and MMORPG that require advanced graphic processing capability and communication capability.

However, in a case where such applications are executed, as described above, there is a problem that a main body of the information processing apparatus tends to have a high temperature due to heat generation by a high load. In particular, since a portable information processing apparatus such as the smartphone 10 is often used in a state where the user directly holds the apparatus main body by the hands, it is desirable to further improve the cooling efficiency.

Therefore, first, in the smartphone 10 according to the present embodiment, the fan accessory 100 is mounted, and the user is caused to hold the smartphone 10 not directly but indirectly via the grip portion 106, thereby reducing the risk of the user getting a burn or the like. In addition, the smartphone 10 performs forced air cooling by the fan 103.

In the existing technology, in such forced air cooling, the rotation speed of the cooling fan is controlled mainly based on the temperature. However, in the use case of executing the game application as described above, there is a feature that a variation width of power consumption during play is large, for example, a screen changes rapidly. Therefore, in order to further improve the cooling efficiency as compared with the existing technology, it is preferable to perform flexible control in consideration of not only the temperature but also the variation in the power consumption.

In consideration of these points, the smartphone 10 according to the present embodiment performs fan control based on at least the power consumption and the temperature as illustrated in FIG. 2. Basically, the smartphone 10 controls the rotation speed of the fan 103 such that the larger the power consumption or the higher the temperature, the larger the rotation speed.

However, as described above, in the use case such as the game application, the variation width of the power consumption is large, in other words, the fluctuation is severe. Therefore, the smartphone 10 calculates a moving average for the power consumption and calculates a rotation speed to be required (hereinafter, referred to as the "required rotation speed") based on the moving average.

On the other hand, regarding the temperature, the smartphone 10 calculates the required rotation speed according to the measured temperature. Then, the smartphone 10 adopts a higher required rotation speed of the required rotation speed based on the power consumption and the required rotation speed based on the temperature.

In addition, the smartphone 10 performs hysteresis control in a case where the rotation speed of the fan 103 is lowered in consideration of the severe fluctuation in the power consumption as described above.

In addition to the cooling structure by the forced air cooling method, the smartphone 10 is provided to be able to start high-temperature control processing for automatically limiting the use of a resource such as the CPU when the temperature is a high temperature exceeding a specified value. However, when the fan 103 rotates, the smartphone 10 changes start timing of the high-temperature control processing by increasing the specified value of the temperature described above.

Details of the present embodiment and various modifications will be described later with reference to FIG. 3 and subsequent drawings.

As described above, the information processing method according to the present embodiment is an information processing method executed by the smartphone 10 including the fan accessory 100 having the fan 103, and the rotation speed of the fan 103 is controlled based on at least the temperature and the power consumption of the smartphone 10.

Therefore, according to the information processing method according to the present embodiment, the cooling efficiency can be further improved. Hereinafter, a configuration example of the smartphone 10 and the fan accessory 100 to which the information processing method according to the present embodiment is applied will be described more specifically.

## <<2. Configuration of Smartphone>>

FIG. 3 is a block diagram illustrating a configuration example of the smartphone 10 according to the embodiment of the present disclosure. In FIG. 3 and FIGS. 6, 13, and 16 illustrated later, only components necessary for describing the features of the present embodiment are illustrated, and descriptions of general components are omitted.

In other words, each component illustrated in FIGS. 3, 6, 13, and 16 is functionally conceptual, and does not necessarily have to be physically configured as illustrated. For example, a specific form of distribution and integration of each block is not limited to the illustrated form, and all or a part thereof can be functionally or physically distributed and integrated in an arbitrary unit according to various loads, use conditions, and the like.

In the description using FIGS. 3, 6, 13, and 16, descriptions of the already described components may be simplified or omitted.

As illustrated in FIG. 3, the smartphone 10 includes a human machine interface (HMI) unit 11, a communication unit 12, a temperature sensor 13, a voltage/current sensor 14, a battery 15, an external interface (I/F) 16, a storage unit 17, and a control unit 18.

The HMI unit 11 is an HMI component group including means for the user and the smartphone 10 to exchange information, a device therefor, software, and the like, and is implemented by a touch panel display, a speaker, a graphical user interface (GUI) component, and the like.

The communication unit 12 is implemented by, for example, a wireless communication module or the like. The communication unit 12 is wirelessly connected to a network such as the Internet, and transmits and receives information to and from other communication device (for example, an application server or another smartphone 10) via the network.

The temperature sensor 13 is a sensor that measures the temperature. The temperature sensor 13 is implemented by, for example, a thermistor or the like. One or more temperature sensors 13 are provided, and measure temperatures of various parts of the smartphone 10 such as the HMI unit 11, the communication unit 12, the battery 15, and the control unit 18.

The voltage/current sensor 14 is a sensor that measures a voltage and a current. One or more voltage/current sensors 14 are provided, and measure voltages and currents of various parts of the smartphone 10 such as the HMI unit 11, the communication unit 12, the battery 15, and the control unit 18. In the voltage/current sensor 14, the voltage sensor and the current sensor may be integrated or may be separate.

The battery 15 is an internal power supply of the smartphone 10. The battery 15 is implemented by, for example, a lithium ion secondary battery or the like. As will be described later, the fan accessory 100 can be connected with an external power supply 400 (see FIG. 13) such as an AC power supply.

When the external power supply 400 is connected to the fan accessory 100, the battery 15 can be charged by receiving power supplied from the external power supply 400 via the fan accessory 100.

The external I/F 16 is a connection interface component to a peripheral device including the fan accessory 100, and is implemented by, for example, a universal serial bus (USB). In the present embodiment, it is assumed that the external I/F 16 is implemented by the USB. When the fan accessory 100 is mounted, the smartphone 10 is USB-connected to the fan accessory 100 by the external I/F 16.

The storage unit 17 is implemented by, for example, a semiconductor memory element such as a random access memory (RAM), a read only memory (ROM), or a flash memory. In the example illustrated in FIG. 3, the storage unit 17 stores application information 17a, high-temperature control parameter information 17b, monitoring parameter information 17c, a calculation model 17d, hysteresis control information 17e, and fan control parameter information 17f.

The application information 17a is information including programs according to the present embodiment, programs of various applications such as a game application, various parameters used during execution of each program, and the like.

The high-temperature control parameter information 17b is information including various parameters, thresholds, and the like used in high-temperature control processing executed by a high-temperature control unit 18d described later. The monitoring parameter information 17c is information including various parameters, thresholds, and the like used in monitoring processing executed by a monitoring unit 18e described later.

The calculation model 17d is information including various parameters, thresholds, and the like used in calculation processing of a moving average of power consumption, a required rotation speed, and the like executed by a calculation unit 18f described later. The hysteresis control information 17e is information including various parameters, thresholds, and the like used in hysteresis control processing executed by a hysteresis control unit 18h described later.

The fan control parameter information 17f is information including various parameters, thresholds, and the like used in fan control service processing executed by a fan control service unit 18i described later.

The control unit 18 is a controller, and is implemented by, for example, a central processing unit (CPU), a micro processing unit (MPU), a graphics processing unit (GPU), or the like executing various programs stored in the storage unit 17 using a RAM as a work area. Further, the control unit 18 is implemented by, for example, an integrated circuit such as an application specific integrated circuit (ASIC) or a field programmable gate array (FPGA).

The control unit 18 includes an application execution unit 18a, an HMI control unit 18b, a communication control unit 18c, a high-temperature control unit 18d, a monitoring unit 18e, a calculation unit 18f, a determination unit 18g, a hysteresis control unit 18h, and a fan control service unit 18i, and realizes or executes a function and an action of information processing described below.

The application execution unit 18a reads the application information 17a stored in the storage unit 17 and executes the program according to the present embodiment. In addition, the application execution unit 18a reads the application information 17a according to the user's operation input via the HMI unit 11, and executes an arbitrary program such as a game application designated by the user.

The HMI control unit 18b controls input and output of various types of information via the HMI unit 11 generated when the application execution unit 18a executes the program. The communication control unit 18c controls communication of various types of information via the communication unit 12.

When the temperature of the smartphone 10 exceeds the specified value, the high-temperature control unit 18d starts the above-described high-temperature control processing in order to alleviate the load applied to the smartphone 10 and suppress the further temperature rise.

Here, FIG. 4 is an (first) explanatory diagram of the high-temperature control processing according to the embodiment of the present disclosure. FIG. 5 is an (second) explanatory diagram of the high-temperature control processing according to the embodiment of the present disclosure.

As illustrated in FIG. 4, the high-temperature control processing has three operation modes of a "power save" mode, a "normal" mode, and a "performance" mode.

The "power save" mode is a mode in which priority is given to saving power (power consumption), and is an operation mode in which the resource limit amount is largest among the three high-temperature control modes. The "performance" mode is a mode in which priority is given to the performance of the smartphone 10, and is an operation mode in which the resource limit amount is smallest among the three high-temperature control modes. The "normal" mode is an operation mode in which the resource limit amount is between the "power save" mode and the "performance" mode.

This operation mode is designated by the user via the HMI unit 11, for example, and is set to the high-temperature control parameter information 17b in advance. The high-temperature control unit 18d executes the high-temperature control processing based on the setting content of the high-temperature control parameter information 17b.

The high-temperature control unit 18d starts the high-temperature control processing when the temperature of the smartphone 10 exceeds a specified value. The prescribed value can be made different between when the fan 103 stops and when the fan 103 rotates.

As illustrated in FIG. 5, the high-temperature control unit 18d executes the high-temperature control processing with "30°C" as the start temperature, for example, "at the time of fan stop" where the fan 103 stops. "At the time of fan stop" includes a case where the fan accessory 100 is not mounted on the smartphone 10. Further, the high-temperature control unit 18d executes the high-temperature control processing with "35°C" as the start temperature, for example, "at the time of fan rotation" where the fan 103 rotates at least.

The start temperature illustrated in FIG. 5 is set to the high-temperature control parameter information 17b in advance for each mode illustrated in FIG. 4, for example. While referring to the high-temperature control parameter information 17b, the high-temperature control unit 18d executes the high-temperature control processing according to the temperature monitored by the monitoring unit 18e and the rotation of the fan 103 controlled by the fan control service unit 18i to be described later.

Note that a temperature to be compared with the start temperature that is a specified value may be a highest value or an average value among the temperatures measured by the plurality of temperature sensors 13. In addition, different start temperatures may be set for the plurality of temperature sensors 13, and the high-temperature control processing may be executed when the temperature measured by at least one temperature sensor 13 reaches the start temperature.

The description returns to FIG. 3. The monitoring unit 18e monitors a measurement value of the voltage/current sensor 14 and a measurement value of the temperature sensor 13 as needed. FIG. 6 is a block diagram illustrating a configuration example of the monitoring unit 18e according to the embodiment of the present disclosure. As illustrated in FIG. 6, the monitoring unit 18e includes a voltage/current monitoring unit 18ea and a temperature monitoring unit 18eb.

The voltage/current monitoring unit 18ea acquires a measurement value of the voltage/current sensor 14 as needed, and outputs the measurement value to the calculation unit 18f. The temperature monitoring unit 18eb acquires a measurement value of the temperature sensor 13 as needed and outputs the measurement value to the calculation unit 18f.

Note that the monitoring unit 18e may monitor various types of information indicating the situation of the smartphone 10 in addition to the measurement value of the voltage/current sensor 14 and the measurement value of the temperature sensor 13. For example, the monitoring unit 18e may monitor a situation of each application (hereinafter, appropriately referred to as the "application situation") being executed on the smartphone 10, the charge state of the battery 15, and the like. Such a modification will be described later with reference to FIGS. 16 to 18.

The description returns to FIG. 3. The calculation unit 18f calculates the power consumption of the smartphone 10 based on the measurement value of the voltage/current sensor 14 input from the monitoring unit 18e. In addition, the calculation unit 18f calculates a moving average of the calculated power consumption for each predetermined cycle. In addition, the calculation unit 18f calculates the required rotation speed for the fan 103 based on the power consumption from the calculated moving average.

In addition, the calculation unit 18f calculates the required rotation speed for the fan 103 based on the temperature for each predetermined cycle from the measurement value of the temperature sensor 13 input from the monitoring unit 18e.

The calculation unit 18f calculates the power consumption using the following Formula (1). Formula (1) is included in the above-described calculation model 17d, for example.

$$\text{System Power} = (\text{USB_Voltage}^*\text{USB_Current}) - (\text{Voltage_now}^*\text{Current_now}) \quad \cdots (1)$$

In Formula (1), "System Power" on the left side is power consumption. "USB_Voltage*USB_Current", which is a first term on the right side, is power supplied to the smartphone 10 via the external I/F 16 when the external power supply 400 is connected to the fan accessory 100. "Voltage_now*Current_now", which is a second term on the right side, is power based on the voltage and the current measured by the voltage/current sensor 14.

Since whether the current flows into or flows out of the battery 15 is determined by a sign "Current_now", the sign needs to be determined for calculation. However, since the supply power of the first term is larger as a calculation result, the total power consumption becomes a positive value. At the time of negative charging corresponding to a case where the external power supply 400 is not connected to the fan accessory 100, a case where high-load processing is being executed, or the like, since the sign of "Current_now" is reversed, the total power consumption becomes a positive value also in this case.

In the present embodiment, the calculation unit 18f calculates the required rotation speed based on the power consumption and the temperature based on the rotation speed level. Calculation processing according to the present embodiment will be described with reference to FIGS. 7 to 12. FIGS. 7 to 12 are (first to sixth) explanatory diagrams of the calculation processing according to the embodiment of the present disclosure.

In the present embodiment, as illustrated in FIG. 7, for example, the rotation speed of the fan 103 is classified into levels. Note that, in FIGS. 7 to 12, four levels are roughly classified. This is merely for convenience of description and does not limit the actual level classification content.

Then, for (the moving average of) the power consumption, the calculation unit 18f calculates the rotation speed level based on map information in which the power consumption and the rotation speed level (see "Fan level" on a vertical axis) are associated with each other as illustrated in FIG. 8.

According to an example of the map information illustrated in FIG. 8 and an example of the transition of the power consumption illustrated in FIG. 9, the calculation unit 18f takes, for example, a moving average of the power consumption per minute, and calculates the rotation speed level as "4" for a section in which the moving average is "4.5 W". In addition, the calculation unit 18f calculates the rotation speed level as "2" for a section where the moving average is "2.5 W". In addition, the calculation unit 18f calculates the rotation speed level as "1" for a section where the moving average is "1.5 W" .

Even if the rotation speed level is calculated based only on the power consumption and the fan 103 is controlled according to the rotation speed level, at least the coolability according to the load can be considered. In addition, since the above-described high-temperature control processing is started in a case where the fan accessory 100 is mounted from a state where the smartphone 10 is hot or a case where the environmental temperature is high, a certain effect can be obtained even by the fan control based only on the power consumption.

On the other hand, for the temperature, as illustrated in FIG. 10, the calculation unit 18f calculates the rotation speed level based on map information in which the temperature (thermistor temperature) and the rotation speed level (see "fan level" on the vertical axis) are associated with each other.

According to the example of the map information illustrated in FIG. 10 and the example of the transition of the temperature illustrated in FIG. 11, the calculation unit 18f refers to the measurement value of the temperature sensor 13 every several minutes, for example, and calculates the rotation speed level as "1" at a point of time at which the temperature is "29°C". In addition, the calculation unit 18f calculates the rotation speed level as "2" at a point of time at which the temperature is "33°C". In addition, the calculation unit 18f calculates the rotation speed level as "3" at a point of time at which the temperature is "36°C".

Note that, similarly to the existing technology, even if the rotation speed level is calculated based only on the temperature and the fan 103 is controlled according to the rotation speed level, at least the coolability according to the temperature of the smartphone 10 can be considered.

In the present embodiment, the determination unit 18g to be described later adopts the higher rotation speed level of the rotation speed level calculated based on the power consumption and the rotation speed level calculated based on the temperature. By adopting the higher required rotation speed level in the power consumption and the temperature of the smartphone 10 and controlling the rotation speed of the fan 103 based on the higher required rotation speed level, the coolability according to both the load and the temperature of the smartphone 10 can be considered.

As illustrated in FIG. 12, for example, a moving average of power consumption per minute is taken, and the determination unit 18g adopts a rotation speed level based on the moving average to control the rotation speed of the fan 103, and at the same time, the fan 103 may be forcibly operated at the maximum rotation speed at a point of time at which the temperature reaches the temperature at which the high-temperature control processing is started based on the monitoring result of the temperature. In this case, it is possible to cover a case where the temperature is high while basically controlling the fan 103 based on the power consumption.

The table information and the map information illustrated in FIGS. 7, 8, 10, and 12 are included in, for example, the above-described calculation model 17d. The calculation cycle of the moving average of the power consumption, the reference cycle of the temperature, and the like are included in the monitoring parameter information 17c described above, for example.

The description returns to FIG. 3. As described above, the determination unit 18g adopts the higher rotation speed level of the rotation speed level calculated based on the power consumption and the rotation speed level calculated based on the temperature. In addition, the determination unit 18g converts the required rotation speed from the adopted rotation speed level.

When the required rotation speed converted by the determination unit 18g is lower than the current rotation speed of the fan 103, the hysteresis control unit 18h executes hysteresis control processing for preventing a rapid change in the rotation speed of the fan 103.

The fan control service unit 18i generates a control signal for controlling the rotation of the fan 103 based on the required rotation speed determined by the determination unit 18g and considering the hysteresis by the hysteresis control unit 18h, and outputs the control signal to the fan accessory 100 via the external I/F 16.

<<3. Configuration of Fan Accessory>>

Next, a configuration example of the fan accessory 100 according to the embodiment of the present disclosure will be described with reference to FIG. 13. FIG. 13 is a block diagram illustrating the configuration example of the fan accessory 100 according to the embodiment of the present disclosure.

As illustrated in FIG. 13, the fan accessory 100 includes a first external I/F 101, a second external I/F 102, a fan 103, a light-emitting diode (LED) 104, and a control unit 105.

The first external I/F 101 is a connection interface component to the smartphone 10, and is implemented by a USB in the present embodiment. At the time of being mounted on the smartphone 10, the fan accessory 100 is USB-connected to the smartphone 10 by the first external I/F 101.

The second external I/F 102 is a group of connection interface components for connecting the fan accessory 100 to peripheral devices. The fan accessory 100 is connected to an external DSP (display) 200, an external SP (speaker) 300, an external power supply 400, and the like via the second external I/F 102. Note that the fan accessory 100 is connected to the external DSP 200 by, for example, HDMI (registered trademark).

The fan 103 is a cooling fan. The LED 104 is a lighting component that notifies the state of the fan 103, and is disposed at, for example, a position visible to the user of the fan accessory 100.

The control unit 105 is a controller similarly to the control unit 18 described above. Further, the control unit 105 can be implemented by, for example, an integrated circuit such as an ASIC or an FPGA.

The control unit 105 includes a fan control unit 105a, an LED control unit 105b, an external output control unit 105c, and a power feeding control unit 105d, and realizes or executes a function and an action of information processing described below.

The fan control unit 105a controls the fan 103 based on a control signal of the fan 103 from the smartphone 10 input via the first external I/F 101. Note that the fan control unit 105a can control the fan 103 while appropriately correcting the control signal from the smartphone 10 according to the hardware specification or the like of the fan 103.

The LED control unit 105b controls a lighting state of the LED 104 to notify the user of the state of the fan 103. As an example, the LED control unit 105b turns on the LED 104 in red when the rotation speed of the fan 103 is high, and in a color other than red when the rotation speed of the fan 103 is low.

The external output control unit 105c controls external output to the peripheral device via the second external I/F 102. For example, the external output control unit 105c acquires an image of an application being executed from the smartphone 10 via the first external I/F 101, and outputs the image to the external DSP 200 via the second external I/F 102. In addition, the external output control unit 105c acquires a voice of the application being executed from the smartphone 10 via the first external I/F 101, and outputs the voice to the external SP 300 via the second external I/F 102.

When the external power supply 400 is connected via the second external I/F 102, the power feeding control unit 105d feeds power from the external power supply 400 to the fan 103, the LED 104, and the control unit 105. When the external power supply 400 is connected via the second external I/F 102, the power feeding control unit 105d feeds power from the external power supply 400 to the smartphone 10 via the first external I/F 101.

When the external power supply 400 is not connected via the second external I/F 102, the power feeding control unit 105d receives power supply from the battery 15 of the smartphone 10 via the first external I/F 101. In order to secure power required for the operation of the fan accessory 100, the fan accessory 100 may also be provided with a battery (not illustrated) as an internal power supply. In addition, wireless power feeding may be enabled.

Next, a processing procedure executed by the smartphone 10 will be described with reference to FIGS. 14 and 15. FIG. 14 is a flowchart illustrating a processing procedure executed by the smartphone 10 according to the embodiment of the present disclosure. FIG. 15 is a flowchart illustrating a processing procedure of hysteresis control processing illustrated in FIG. 14.

As illustrated in FIG. 14, the control unit 18 of the smartphone 10 monitors a voltage and a current based on a measurement value of the voltage/current sensor 14 (step S101). Then, the control unit 18 calculates power consumption (step S102). Then, the control unit 18 calculates a moving average of the calculated power consumption (step S103). Then, the control unit 18 calculates a rotation speed level from the moving average (step S104).

On the other hand, in parallel with steps S101 to S104, the control unit 18 monitors the temperature based on the measurement value of the temperature sensor 13 (step S105), and calculates a rotation speed level from the temperature (step S106).

Then, the control unit 18 adopts a higher rotation speed level of the rotation speed level based on the power consumption and the rotation speed level based on the temperature (step S107). Then, the control unit 18 determines whether or not a required rotation speed converted from the adopted rotation speed level is lower than a current rotation speed (step S108).

When the required rotation speed is lower than the current rotation speed (step S108, Yes), the control unit 18 executes hysteresis control processing (step S109).

As illustrated in FIG. 15, in the hysteresis control processing, the control unit 18 determines whether or not a hysteresis interval, which is a static variable for the hysteresis control processing, is larger than 0 (step S201).

When the hysteresis interval is larger than 0 (step S201, Yes), the control unit 18 decrements (that is, 1 minus) a hysteresis counter that is also a static variable for the hysteresis control processing (step S202). Then, the control unit 18 determines whether or not the hysteresis counter is 0 (step S203).

When the hysteresis counter is 0 (step S203, Yes), the control unit 18 sets the hysteresis counter to the hysteresis interval (step S204), and transitions to step S205. Even when the hysteresis interval is 0 (step S201, No), the control unit transitions to step S205.

In step S205, the control unit 18 determines that control at the required rotation speed is necessary. Then, the control unit 18 returns from the hysteresis control processing.

On the other hand, when the hysteresis counter is not 0 (step S203, No), the control unit 18 determines that the control at the required rotation speed is unnecessary. Then, the control unit 18 returns from the hysteresis control processing. The hysteresis interval and the hysteresis counter illustrated in FIG. 15 are secured in, for example, the hysteresis control information 17e.

The description returns to FIG. 14. After execution of the hysteresis control processing, the control unit 18 determines whether or not control at the required rotation speed is necessary (step S110). When the control at the required rotation speed is necessary (step S110, Yes), the control unit 18 controls the fan 103 at the required rotation speed (step S111). Then, the control unit 18 repeats the processing from step S101.

When the control at the required rotation speed is unnecessary (step S110, No), the control unit 18 repeats the processing from step S101.

When the required rotation speed is equal to or higher than the current rotation speed (step S108, No), the control unit 18 controls the fan 103 at the required rotation speed (step S111). Then, the control unit 18 repeats the processing from step S101.

## <<4. Modifications>>

Meanwhile, the embodiment of the present disclosure described above can include several modifications.

FIGS. 16 to 21 are (first to sixth) explanatory diagrams of the modifications. In the present embodiment described above, the monitoring unit 18e monitors the voltage, the current, and the temperature, but may further monitor an application situation and the like.

As illustrated in FIG. 16, a monitoring unit 18eA according to the modification further includes an application situation monitoring unit 18ec and the like. The application situation monitoring unit 18ec monitors an application situation, for example, the type of an application being executed and the on/off state of the screen of the smartphone 10.

Based on the type of the application being executed and the on/off state of the screen of the smartphone 10, as illustrated in FIG. 17, the fan control parameter may be switched according to, for example, whether the game application is being executed, whether an application other than the game is being executed, or whether the screen is turned off.

FIG. 17 illustrates an example in which a set of fan control parameters is set in advance in the fan control parameter information 17f to lower the coolability obtained in the order of parameters #1 to #3, and switching is performed according to the application situation.

As a result, the smartphone 10 can improve the cooling efficiency according to the application situation.

In addition, the application situation monitoring unit 18ec may monitor the application situation such as the screen change amount per predetermined unit time or the number of applications being executed as illustrated in FIG. 18, in addition to the type of the application being executed and the on/off state of the screen of the smartphone 10. Then, the calculation unit 18f may calculate the power consumption based on these application situations.

In addition, as illustrated in FIG. 19, the calculation unit 18f may learn each monitoring result monitored by the monitoring units 18e and 18eA and each calculation value based on the monitoring result using an algorithm such as machine learning so as to optimize cooling efficiency, and construct the calculation model 17d as an artificial intelligence (AI) model. Then, the calculation unit 18f may perform AI prediction of a prediction value using the calculation model 17d.

As a result, the smartphone 10 can control the fan 103 such that the cooling efficiency is optimized according to various situations of the smartphone 10.

In addition, as illustrated in FIG. 20, the monitoring unit 18eA may monitor the state of charge of the battery 15, and the calculation unit 18f may calculate a charge control value based on the state of charge. For example, when the battery 15 continues to receive power supply from the external power supply 400 in a state of full charge and the control unit 18 executes high-load processing, there is a high possibility that the temperature of the battery becomes high. Therefore, in such a case, for example, a charge control value for cutting off power supply from the external power supply 400 may be calculated.

Further, a case where not only the smartphone 10 but also the fan accessory 100 and the fan 103 have a high temperature is considered. For example, in a case where the fan accessory 100 performs external output to the external DSP 200 by HDMI output or in a case where power is supplied to the battery 15 in the state of full charge described above, it is assumed that the fan accessory 100 or the fan 103 has a high temperature.

In order to cope with such a situation, as illustrated in FIG. 21, a fan accessory 100A according to the modification may include temperature sensors 13 inside and outside the fan 103. The control unit 18 of the smartphone 10 may perform fan control based on the temperature of the fan accessory 100A, in addition to the power consumption and the temperature of the smartphone 10. As a result, the smartphone 10 can further improve the cooling efficiency by performing fan control in consideration of a case where the fan accessory 100A or the fan 103 has a high temperature. In addition, not only the temperature of the smartphone 10 and the temperature of the fan accessory 100A but also the environmental temperature may be considered.

In addition, while the fan 103 enables sufficient cooling of the smartphone 10, there may be a problem that the rotational sound of the fan 103 becomes noise. In addition, when the external power supply 400 is not connected, the power of the battery 15 of the smartphone 10 is required for the operation of the fan 103, which may cause a problem that the battery 15 is quickly consumed. Therefore, regarding the operation of the fan 103, for example, when the user designates a "silent priority" mode or a "low power consumption" mode via the HMI unit 11, control may be executed in which the rotation speed level of the fan 103 is lowered by, for example, one step as compared with the normal control of the fan 103. Alternatively, the start temperature illustrated in FIG. 5 may be set slightly higher (+2°C or the like). Note that the "silent priority" mode and the "low power consumption" mode referred to herein may be provided so as to be settable in parallel with the three modes of the "power save" mode, the "normal" mode, and the "performance" mode related to the resource limit amount of the CPU or the like described above. In addition, the "silent priority" mode and the "low power consumption" mode may be set as, for example, higher-level modes of the above-described three modes, and the above-described three modes may be settable while the "silent priority" mode and the "low power consumption" mode are set.

In the present embodiment described above, the fans 103 and 103A are provided separately from the smartphone 10 as an example. However, the fans 103 and 103A may be incorporated in the smartphone 10. Further, in the present embodiment described above, an example has been described in which the information processing apparatus is the smartphone 10, but the information processing apparatus may be various computers such as a notebook PC other than the smartphone 10.

Further, in the present embodiment described above, an example has been described in which the smartphone 10 is the information processing apparatus including the fan accessory 100 having the fan 103, and includes the control unit 18, and the control unit 18 controls the rotation speed of the fan 103 based on at least the temperature and the power consumption of the smartphone 10. However, the present disclosure is not limited thereto, and the control unit 105 of the fan accessory 100 may perform this control processing.

In this case, the control unit 105 includes processing units corresponding to some or all of the high-temperature control unit 18d, the monitoring unit 18e, the calculation unit 18f, the determination unit 18g, the hysteresis control unit 18h, and the fan control service unit 18i described above. The control unit 105 executes this control processing while appropriately acquiring the temperature and the power consumption on the smartphone 10 side, information regarding an application, and the like via the first external I/F 101.

Further, all or some of the processing described as being automatically performed among the processing described in the embodiments of the present disclosure described above can be manually performed, or all or some of the processing described as being manually performed can be automatically performed by a known method. In addition, the processing procedure, specific name, and information including various data and parameters illustrated in the document and the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, use conditions, and the like.

In addition, the embodiments of the present disclosure described above can be appropriately combined in a region in which the processing contents do not contradict each other.

<<5. Hardware Configuration>>

The smartphone 10 according to the embodiment of the present disclosure described above is implemented by a computer 1000 having a configuration illustrated in FIG. 22, for example. FIG. 22 is a hardware configuration diagram illustrating an example of the computer 1000 that implements the functions of the smartphone 10. The computer 1000 includes a CPU 1100, a RAM 1200, a ROM 1300, a secondary storage device 1400, a communication interface 1500, and an input/output interface 1600. Each unit of the computer 1000 is connected by a bus 1050.

The CPU 1100 operates based on a program stored in the ROM 1300 or the secondary storage device 1400 and controls each unit. For example, the CPU 1100 develops the program stored in the ROM 1300 or the secondary storage device 1400 in the RAM 1200, and executes processing corresponding to various programs.

The ROM 1300 stores a boot program such as a basic input output system (BIOS) executed by the CPU 1100 when the computer 1000 starts, a program depending on hardware of the computer 1000, and the like.

The secondary storage device 1400 is a computer-readable recording medium that non-transiently records a program executed by the CPU 1100, data used by the program, and the like. Specifically, the secondary storage device 1400 is a recording medium that records a program according to the present disclosure, which is an example of program data 1450.

The communication interface 1500 is an interface for connecting the computer 1000 to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. In addition, the input/output interface 1600 may function as a media interface that reads a program or the like recorded in a predetermined recording medium (media). The media are, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

For example, in a case where the computer 1000 functions as the smartphone 10 according to the embodiment, the CPU 1100 of the computer 1000 implements the function of the control unit 18 by executing a program loaded on the RAM 1200. In addition, the secondary storage device 1400 stores a program according to the present disclosure and data in the storage unit 17. Note that the CPU 1100 reads the program data 1450 from the secondary storage device 1400 and executes the program data, but as another example, these programs may be acquired from another device via the external network 1550.

<<6. Conclusion>>

As described above, according to an embodiment of the present disclosure, the smartphone 10 is the information processing apparatus including the fan accessory 100 (corresponding to an example of the "fan unit") having the fan 103 (corresponding to an example of the "air cooling fan"), and includes the control unit 18. The control unit 18 controls the rotation speed of the fan 103 based on at least the temperature and the power consumption of the smartphone 10. As a result, the cooling efficiency can be further improved.

Although the embodiments of the present disclosure have been described above, the technical scope of the present disclosure is not limited to the above-described embodiments, and various changes can be made without departing from the gist of the present disclosure. Further, components of different embodiments and modifications may be appropriately combined.

Further, the effects of each embodiment described in the present specification are merely examples and are not limited, and other effects may be provided.

Note that the present technology can also take the following configurations.

(1) An information processing apparatus including a fan unit having an air cooling fan, the information processing apparatus comprising:
a control unit that controls a rotation speed of the air cooling fan based on at least a temperature and power consumption of the information processing apparatus.
(2) The information processing apparatus according to (1), wherein
the fan unit is detachably provided.
(3) The information processing apparatus according to (2), wherein

the control unit
controls the rotation speed of the air cooling fan based on the temperature of the information processing apparatus.

(4) The information processing apparatus according to (3), wherein

the control unit
calculates a required rotation speed for the fan unit such that the rotation speed of the air cooling fan increases as the temperature of the information processing apparatus increases.

(5) The information processing apparatus according to (4), wherein

the control unit
controls the rotation speed of the air cooling fan based on a moving average of the power consumption of the information processing apparatus.

(6) The information processing apparatus according to (5), wherein

the control unit
calculates the required rotation speed such that the rotation speed of the air cooling fan increases as the moving average increases.

(7) The information processing apparatus according to (6), wherein

the control unit
adopts a larger required rotation speed of the required rotation speed based on the temperature of the information processing apparatus and the required rotation speed based on the power consumption of the information processing apparatus.

(8) The information processing apparatus according to any one of (4) to (7), wherein

the control unit,
when the required rotation speed is lower than a current rotation speed, executes hysteresis control processing.

(9) The information processing apparatus according to any one of (3) to (8), wherein

the control unit further
controls the rotation speed of the air cooling fan based on a temperature of the fan unit.

(10) The information processing apparatus according to any one of (1) to (9), wherein

the control unit
is provided to be able to start high-temperature control processing that automatically limits use of resources including the control unit when a temperature of the information processing apparatus exceeds a specified value, and increases the specified value to be larger during rotation of the air cooling fan than during stop of the air cooling fan.

(11) The information processing apparatus according to (10), wherein

the control unit
controls the rotation speed of the air cooling fan based on the power consumption of the information processing apparatus until the temperature of the information processing apparatus reaches the specified value, and controls the rotation speed of the air cooling fan such that the rotation speed is forcibly set to a maximum rotation speed at a point of time at which the temperature of the information processing apparatus reaches the specified value.

(12) The information processing apparatus according to any one of (1) to (11), wherein

the control unit further
switches a control parameter of the air cooling fan based on a situation of an application being executed.

(13) The information processing apparatus according to (12), wherein

the situation of the application includes at least
a type of the application being executed and an on/off state of a screen of the information processing apparatus.

(14) The information processing apparatus according to (13), wherein

the control unit
switches the control parameter such that a required coolability is lower in a case where the type of the application is other than a game than in a case where the type of the application is the game, and switches the control parameter such that the required coolability is lower in a case where the screen is in the off state than in a case where the type of the application is other than the game.

(15) The information processing apparatus according to any one of (1) to (14), wherein

the control unit,
in a case where a first mode for suppressing noise of the air cooling fan or a second mode for suppressing power consumption by the air cooling fan is designated by a user, executes one or both of control for decreasing a rotation speed level of the air cooling fan and control for increasing a start temperature of the air cooling fan, as compared with a case where the first mode or the second mode is not designated.

(16) The information processing apparatus according to any one of (1) to (15), wherein
the information processing apparatus is portable.
(17) An information processing method executed by an information processing apparatus including a fan unit having an air cooling fan, the information processing method comprising:
controlling a rotation speed of the air cooling fan based on at least a temperature and power consumption of the information processing apparatus.
(18) A program causing a computer that is an information processing apparatus including a fan unit having an air cooling fan to execute:
controlling a rotation speed of the air cooling fan based on at least a temperature and power consumption of the information processing apparatus.

Reference Signs List

10 SMARTPHONE
11 HMI UNIT
12 COMMUNICATION UNIT
13 TEMPERATURE SENSOR
14 VOLTAGE/CURRENT SENSOR
15 BATTERY
16 EXTERNAL I/F
17 STORAGE UNIT
17a APPLICATION INFORMATION
17b HIGH-TEMPERATURE CONTROL PARAMETER INFORMATION

17c MONITORING PARAMETER INFORMATION
17d CALCULATION MODEL
17e HYSTERESIS CONTROL INFORMATION
17f FAN CONTROL PARAMETER INFORMATION
18 CONTROL UNIT
18a APPLICATION EXECUTION UNIT
18b HMI CONTROL UNIT
18c COMMUNICATION CONTROL UNIT
18d HIGH-TEMPERATURE CONTROL UNIT
18e, 18eA MONITORING UNIT
18ea VOLTAGE/CURRENT MONITORING UNIT
18eb TEMPERATURE MONITORING UNIT
18ec APPLICATION SITUATION MONITORING UNIT
18f CALCULATION UNIT
18g DETERMINATION UNIT
18h HYSTERESIS CONTROL UNIT
18i FAN CONTROL SERVICE UNIT
100, 100A FAN ACCESSORY
101 FIRST EXTERNAL I/F
102 SECOND EXTERNAL I/F
103, 103A FAN
104 LED
105 CONTROL UNIT
105a FAN CONTROL UNIT
105b LED CONTROL UNIT
105c EXTERNAL OUTPUT CONTROL UNIT
105d POWER FEEDING CONTROL UNIT
106 GRIP PORTION
200 EXTERNAL DSP
300 EXTERNAL SP
400 EXTERNAL POWER SUPPLY

**Claims**

1. An information processing apparatus including a fan unit having an air cooling fan, the information processing apparatus comprising:
   a control unit that controls a rotation speed of the air cooling fan based on at least a temperature and power consumption of the information processing apparatus.

2. The information processing apparatus according to claim 1, wherein
   the fan unit is detachably provided.

3. The information processing apparatus according to claim 2, wherein

   the control unit
   controls the rotation speed of the air cooling fan based on the temperature of the information processing apparatus.

4. The information processing apparatus according to claim 3, wherein

   the control unit
   calculates a required rotation speed for the fan unit such that the rotation speed of the air cooling fan increases as the temperature of the information processing apparatus increases.

5. The information processing apparatus according to claim 4, wherein

   the control unit

controls the rotation speed of the air cooling fan based on a moving average of the power consumption of the information processing apparatus.

**6.** The information processing apparatus according to claim 5, wherein

the control unit
calculates the required rotation speed such that the rotation speed of the air cooling fan increases as the moving average increases.

**7.** The information processing apparatus according to claim 6, wherein

the control unit
adopts a larger required rotation speed of the required rotation speed based on the temperature of the information processing apparatus and the required rotation speed based on the power consumption of the information processing apparatus.

**8.** The information processing apparatus according to claim 4, wherein

the control unit,
when the required rotation speed is lower than a current rotation speed, executes hysteresis control processing.

**9.** The information processing apparatus according to claim 3, wherein

the control unit further
controls the rotation speed of the air cooling fan based on a temperature of the fan unit.

**10.** The information processing apparatus according to claim 1, wherein

the control unit
is provided to be able to start high-temperature control processing that automatically limits use of resources including the control unit when a temperature of the information processing apparatus exceeds a specified value, and increases the specified value to be larger during rotation of the air cooling fan than during stop of the air cooling fan.

**11.** The information processing apparatus according to claim 10, wherein

the control unit
controls the rotation speed of the air cooling fan based on the power consumption of the information processing apparatus until the temperature of the information processing apparatus reaches the specified value, and controls the rotation speed of the air cooling fan such that the rotation speed is forcibly set to a maximum rotation speed at a point of time at which the temperature of the information processing apparatus reaches the specified value.

**12.** The information processing apparatus according to claim 1, wherein

the control unit further
switches a control parameter of the air cooling fan based on a situation of an application being executed.

**13.** The information processing apparatus according to claim 12, wherein

the situation of the application includes at least
a type of the application being executed and an on/off state of a screen of the information processing apparatus.

**14.** The information processing apparatus according to claim 13, wherein

the control unit
switches the control parameter such that a required coolability is lower in a case where the type of the application is other than a game than in a case where the type of the application is the game, and switches the control parameter such that the required coolability is lower in a case where the screen is in the off state than in a case where the type of the application is other than the game.

**15.** The information processing apparatus according to claim 1, wherein

the control unit,
in a case where a first mode for suppressing noise of the air cooling fan or a second mode for suppressing power consumption by the air cooling fan is designated by a user, executes one or both of control for decreasing a rotation speed level of the air cooling fan and control for increasing a start temperature of the air cooling fan, as compared with a case where the first mode or the second mode is not designated.

**16.** The information processing apparatus according to claim 1, wherein
the information processing apparatus is portable.

**17.** An information processing method executed by an information processing apparatus including a fan unit having an air cooling fan, the information processing method comprising:
controlling a rotation speed of the air cooling fan based on at least a temperature and power consumption of the information processing apparatus.

**18.** A program causing a computer that is an information processing apparatus including a fan unit having an air cooling fan to execute:
controlling a rotation speed of the air cooling fan based on at least a temperature and power consumption of the information processing apparatus.

FIG.1

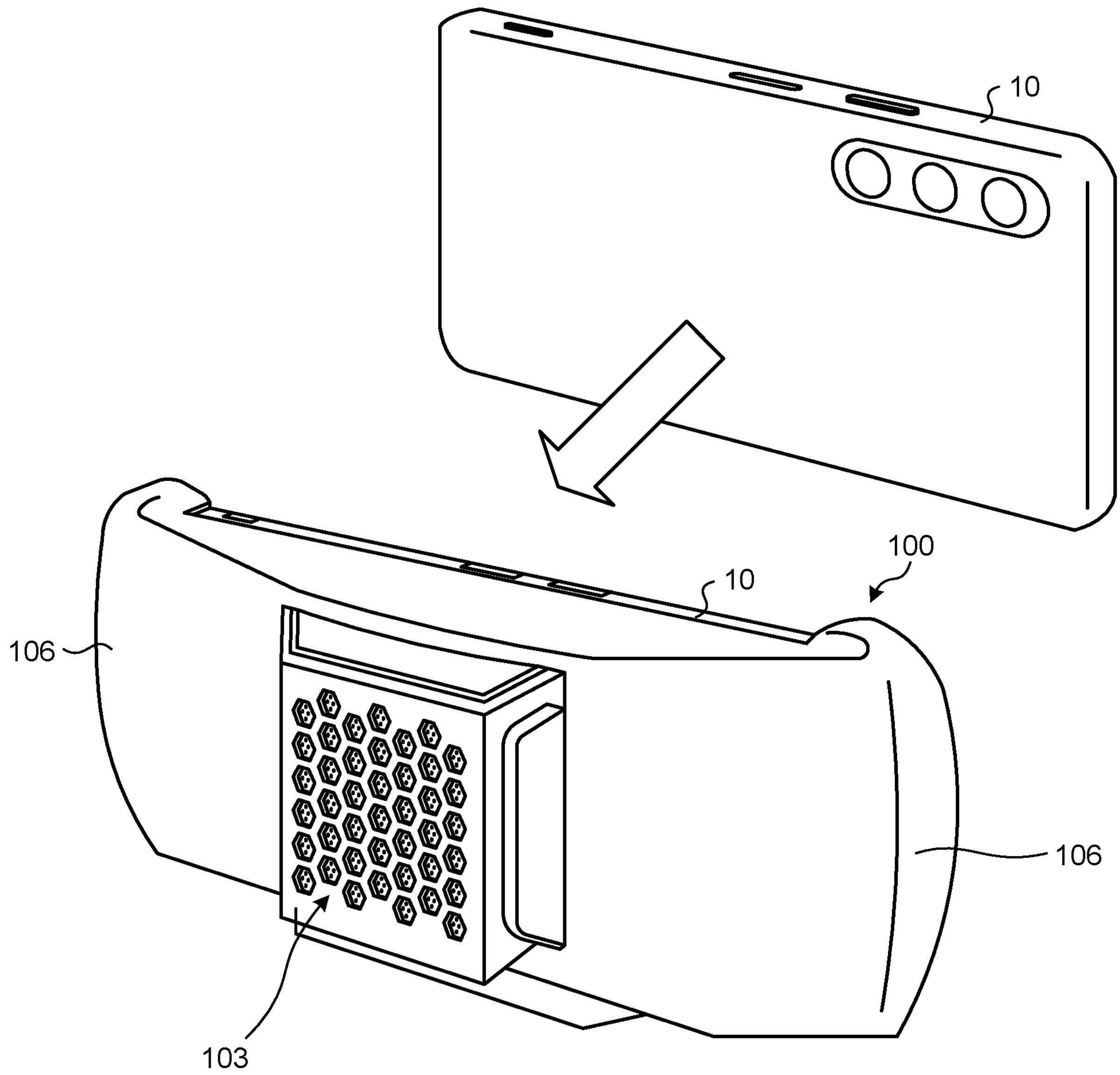
10
100
10
106
106
103

FIG.2

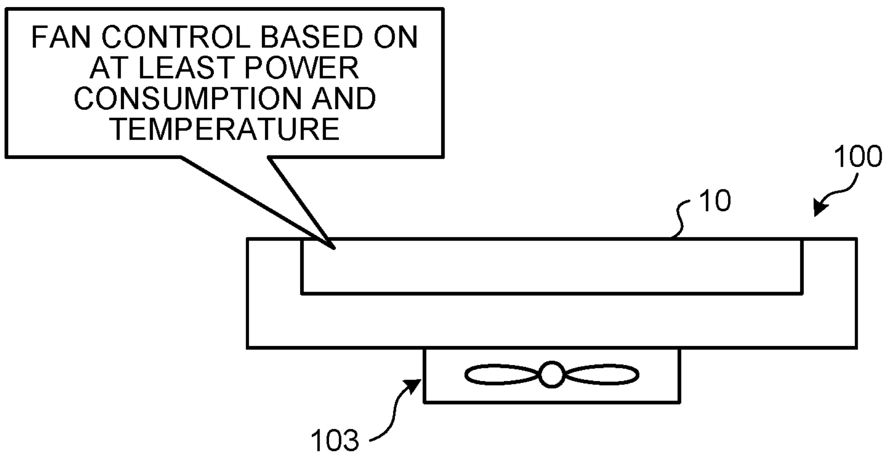
FAN CONTROL BASED ON AT LEAST POWER CONSUMPTION AND TEMPERATURE
100
10
103

FIG.3

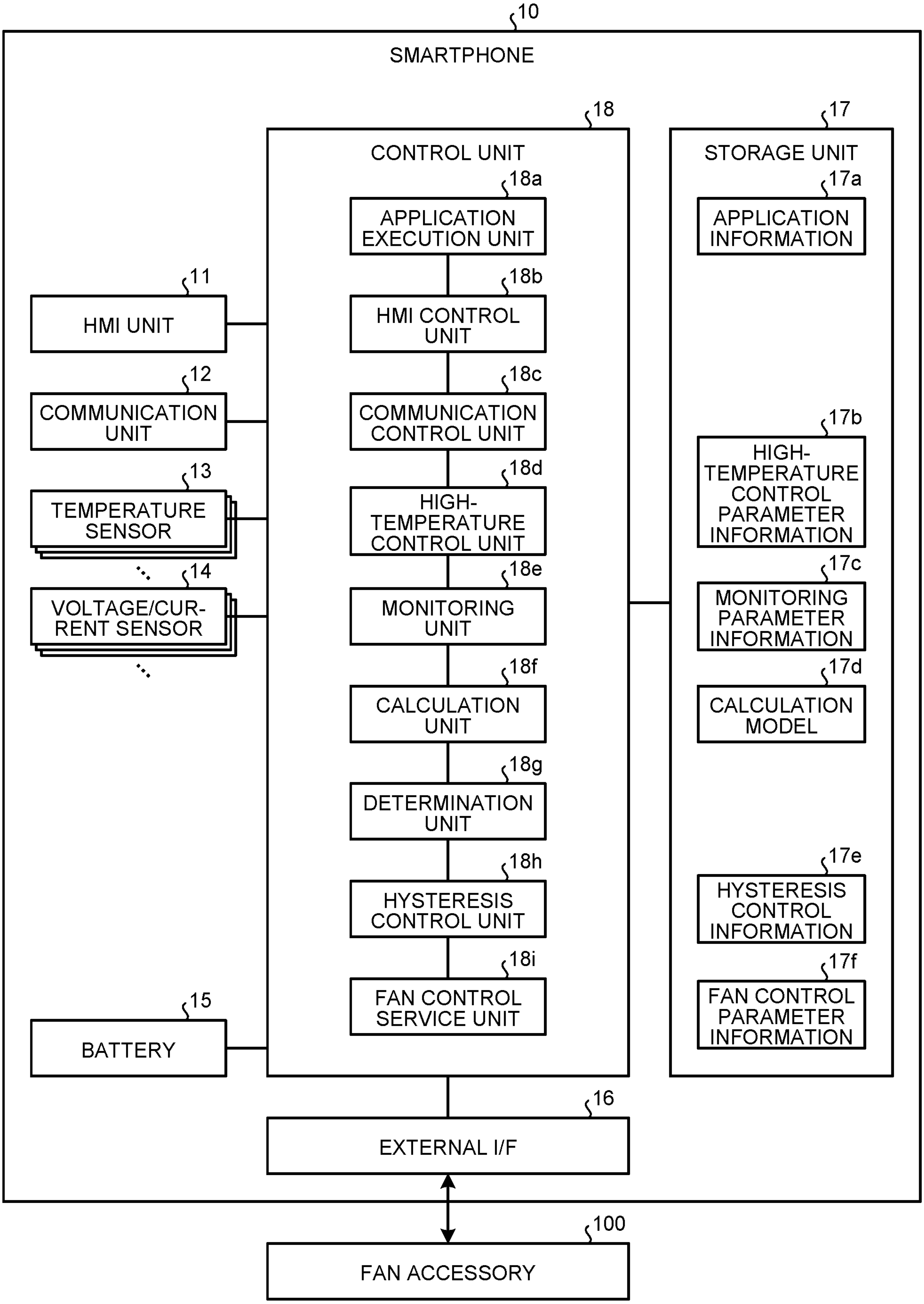
10
SMARTPHONE
18
CONTROL UNIT
18a
APPLICATION EXECUTION UNIT
18b
HMI CONTROL UNIT
18c
COMMUNICATION CONTROL UNIT
18d
HIGH-TEMPERATURE CONTROL UNIT
18e
MONITORING UNIT
18f
CALCULATION UNIT
18g
DETERMINATION UNIT
18h
HYSTERESIS CONTROL UNIT
18i
FAN CONTROL SERVICE UNIT
17
STORAGE UNIT
17a
APPLICATION INFORMATION
17b
HIGH-TEMPERATURE CONTROL PARAMETER INFORMATION
17c
MONITORING PARAMETER INFORMATION
17d
CALCULATION MODEL
17e
HYSTERESIS CONTROL INFORMATION
17f
FAN CONTROL PARAMETER INFORMATION
11
HMI UNIT
12
COMMUNICATION UNIT
13
TEMPERATURE SENSOR
14
VOLTAGE/CURRENT SENSOR
15
BATTERY
16
EXTERNAL I/F
100
FAN ACCESSORY

FIG.4

| HIGH-TEMPERATURE CONTROL MODE | RESOURCE LIMIT AMOUNT |
|---|---|
| POWER SAVE | LARGE |
| NORMAL | MEDIUM |
| PERFORMANCE | SMALL |

FIG.5

| | FAN STOP | FAN ROTATION |
|---|---|---|
| START TEMPERATURE | 30℃ | 35℃ |

FIG.6

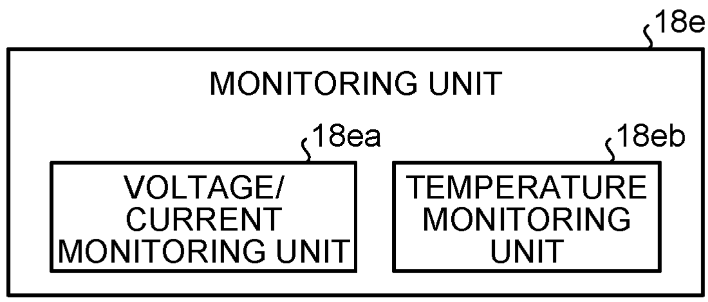


FIG.7

| Level | ROTATION SPEED |
|---|---|
| 1 | SMALL |
| 2 | MEDIUM |
| 3 | LARGE |
| 4 | MAXIMUM |

FIG.8

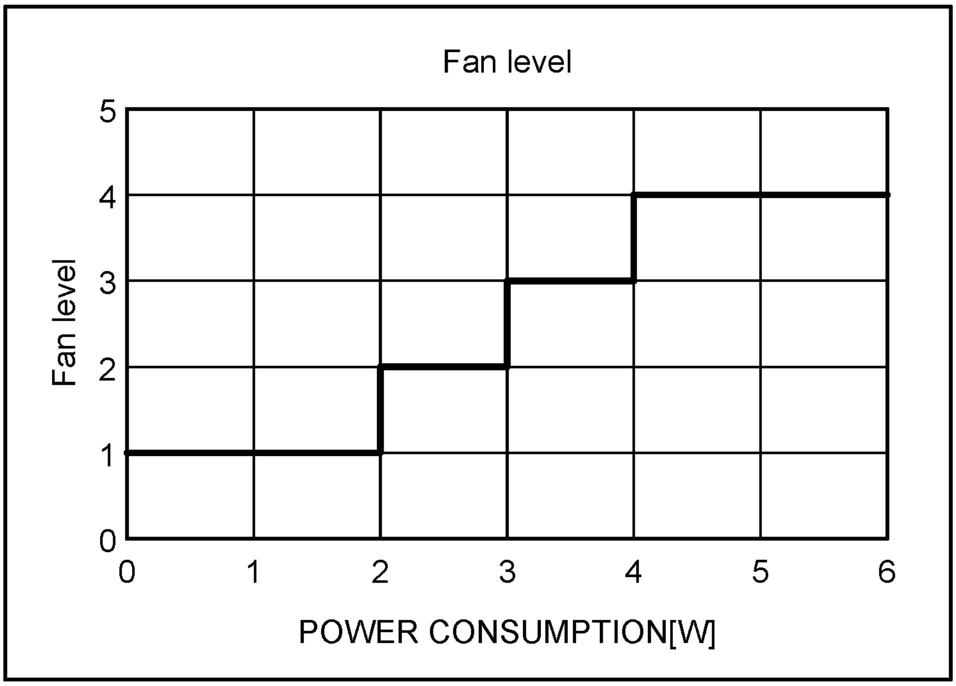
Fan level
Fan level
0
1
2
3
4
5
0
1
2
3
4
5
6
POWER CONSUMPTION[W]

FIG.9

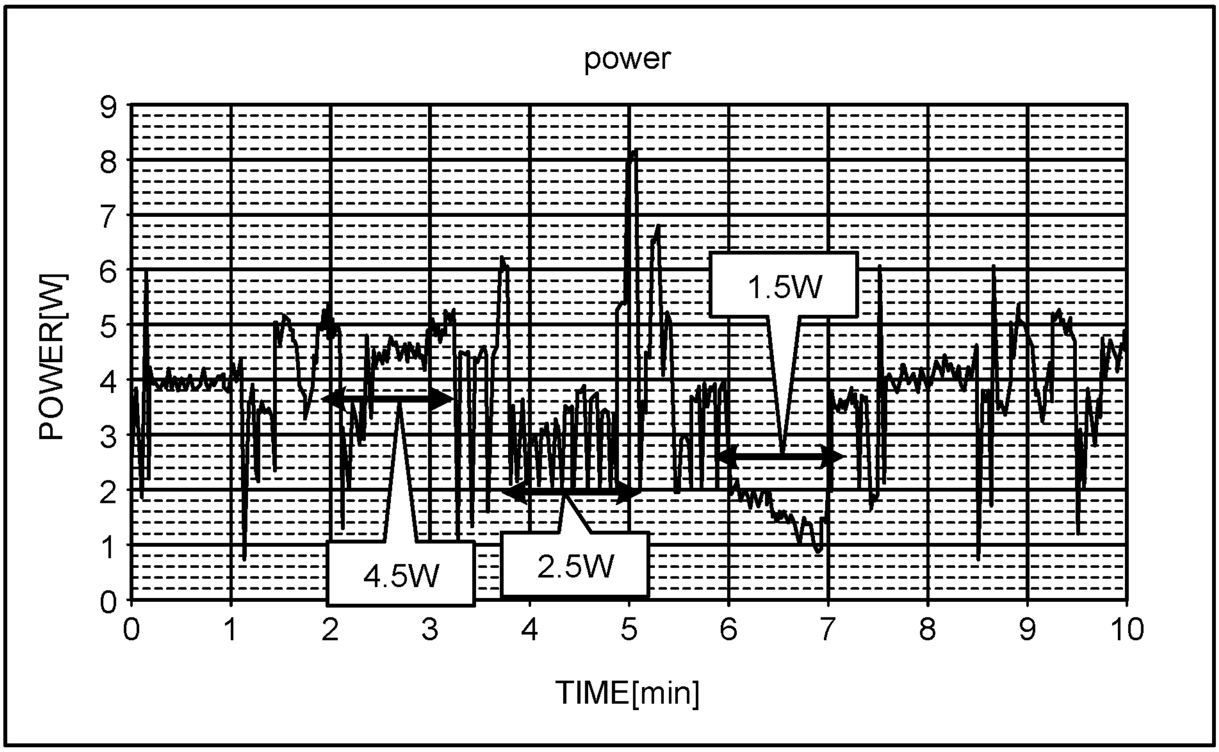
power
POWER[W]
0
1
2
3
4
5
6
7
8
9
0
1
2
3
4
5
6
7
8
9
10
TIME[min]
4.5W
2.5W
1.5W

FIG.10

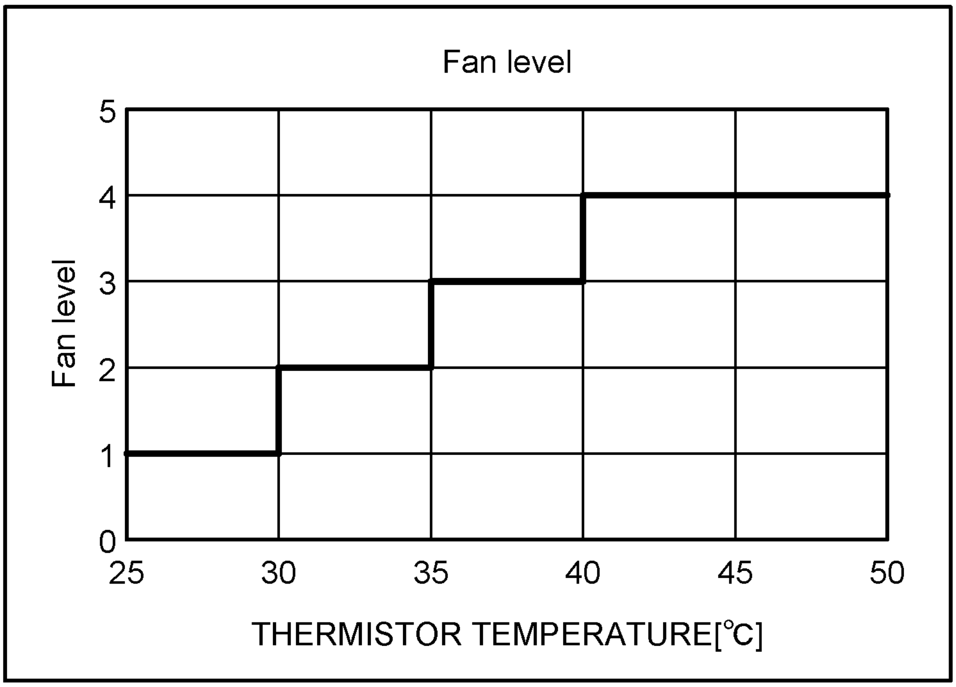
Fan level
5
4
3
2
1
0
Fan level
25
30
35
40
45
50
THERMISTOR TEMPERATURE[℃]

FIG.11

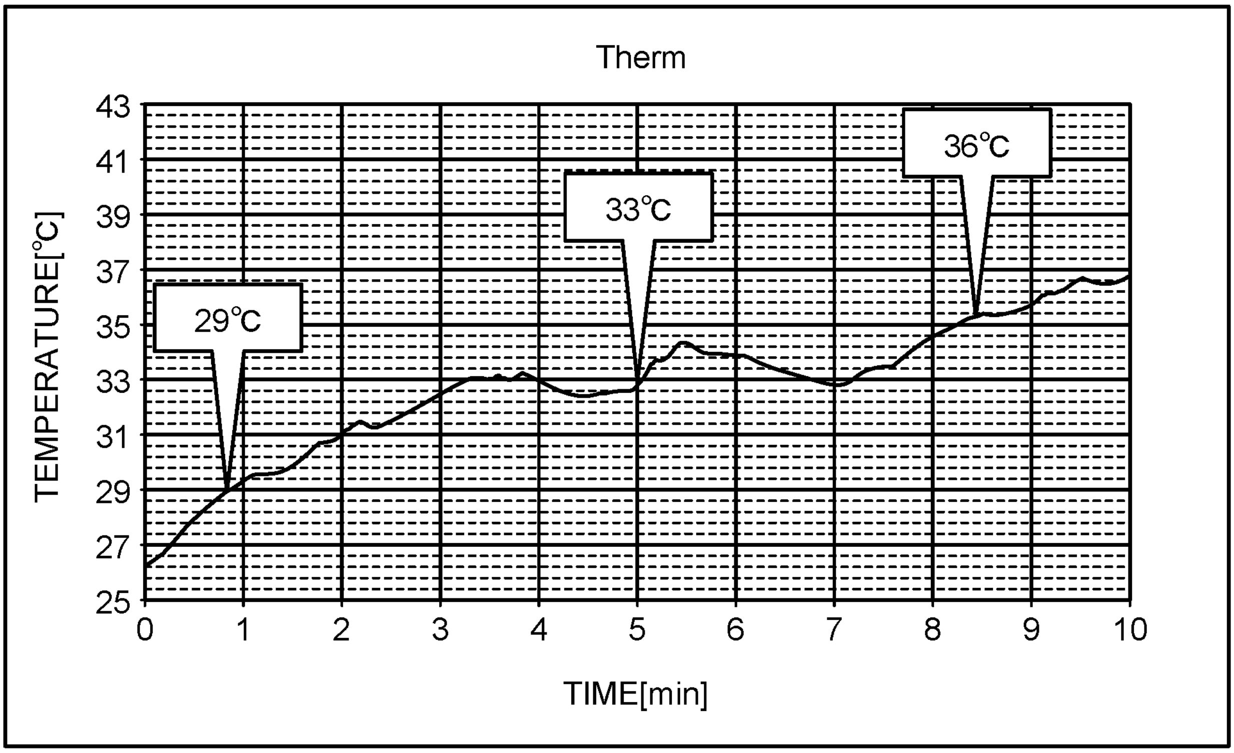
Therm
43
41
39
37
35
33
31
29
27
25
TEMPERATURE[℃]
29℃
33℃
36℃
0
1
2
3
4
5
6
7
8
9
10
TIME[min]

FIG.12

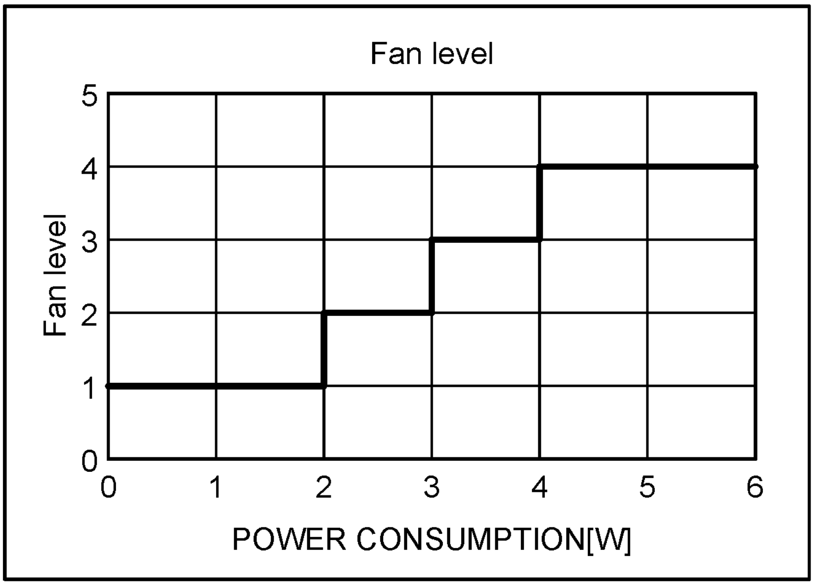


+

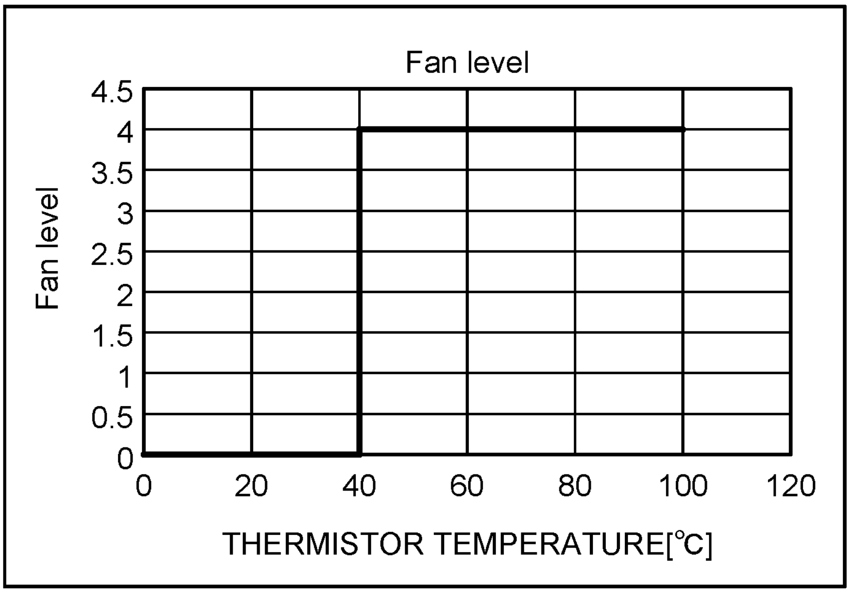


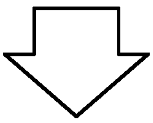

| Level | ROTATION SPEED | POWER CONSUMPTION | TEMPERATURE |
|---|---|---|---|
| 1 | SMALL | 2W | - |
| 2 | MEDIUM | 2W-3W | - |
| 3 | LARGE | 3.1W-4W | - |
| 4 | MAXIMUM | >4W | >40℃ |

FIG.13

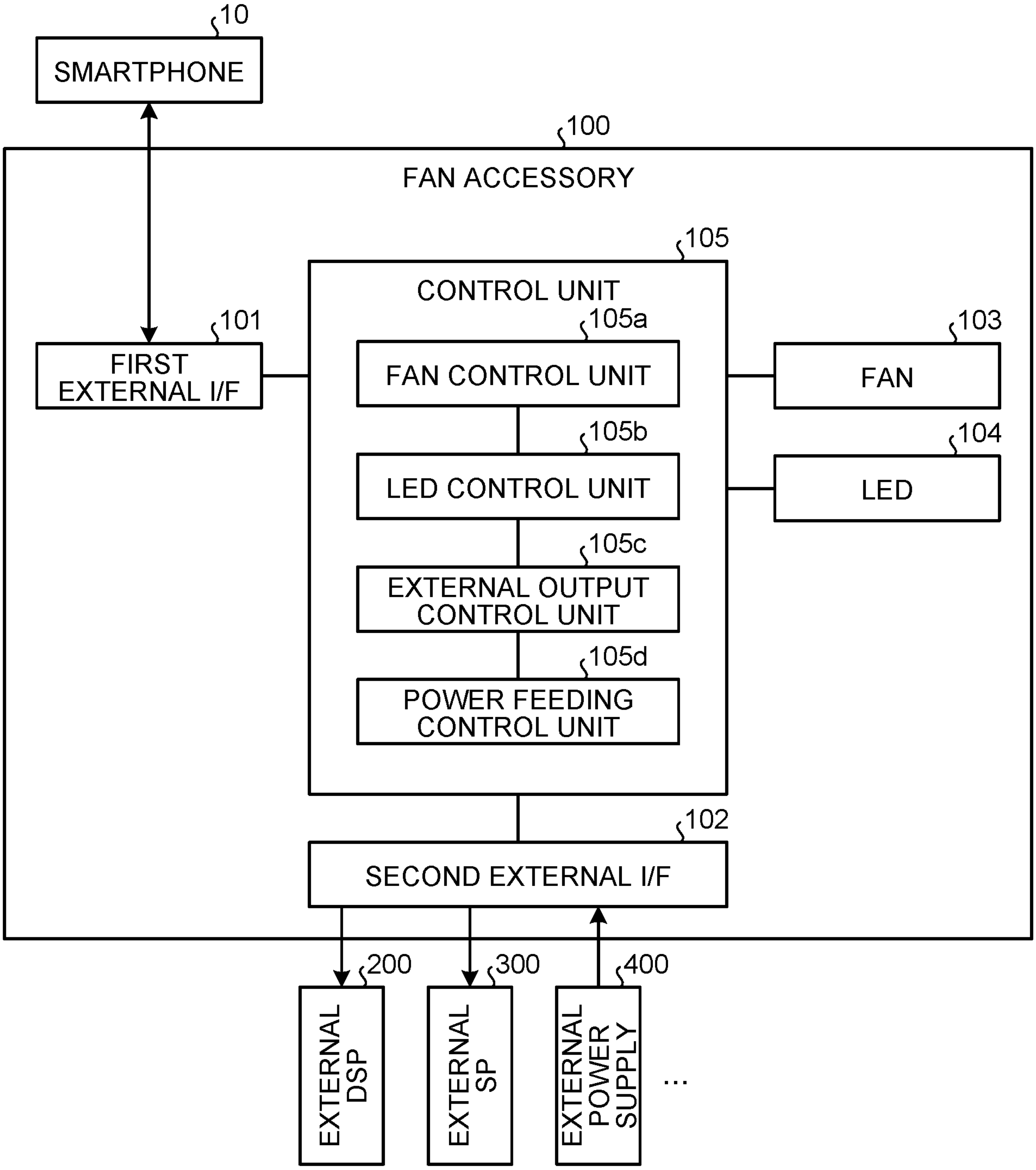
10
SMARTPHONE
100
FAN ACCESSORY
105
CONTROL UNIT
101
FIRST EXTERNAL I/F
105a
FAN CONTROL UNIT
105b
LED CONTROL UNIT
105c
EXTERNAL OUTPUT CONTROL UNIT
105d
POWER FEEDING CONTROL UNIT
103
FAN
104
LED
102
SECOND EXTERNAL I/F
200
EXTERNAL DSP
300
EXTERNAL SP
400
EXTERNAL POWER SUPPLY
...

FIG.14

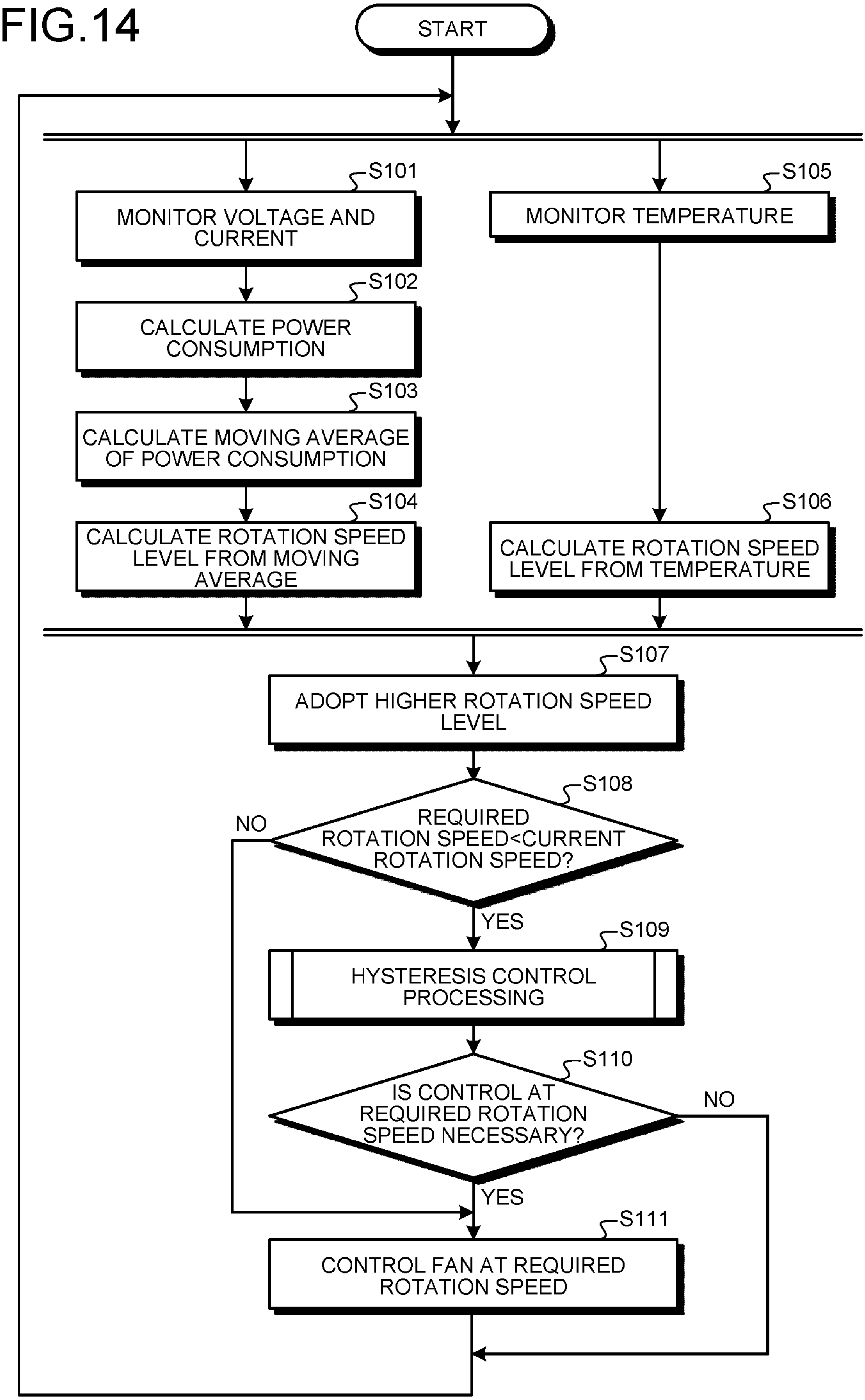
START
S101
MONITOR VOLTAGE AND CURRENT
S102
CALCULATE POWER CONSUMPTION
S103
CALCULATE MOVING AVERAGE OF POWER CONSUMPTION
S104
CALCULATE ROTATION SPEED LEVEL FROM MOVING AVERAGE
S105
MONITOR TEMPERATURE
S106
CALCULATE ROTATION SPEED LEVEL FROM TEMPERATURE
S107
ADOPT HIGHER ROTATION SPEED LEVEL
S108
REQUIRED ROTATION SPEED<CURRENT ROTATION SPEED?
NO
YES
S109
HYSTERESIS CONTROL PROCESSING
S110
IS CONTROL AT REQUIRED ROTATION SPEED NECESSARY?
NO
YES
S111
CONTROL FAN AT REQUIRED ROTATION SPEED

FIG.15

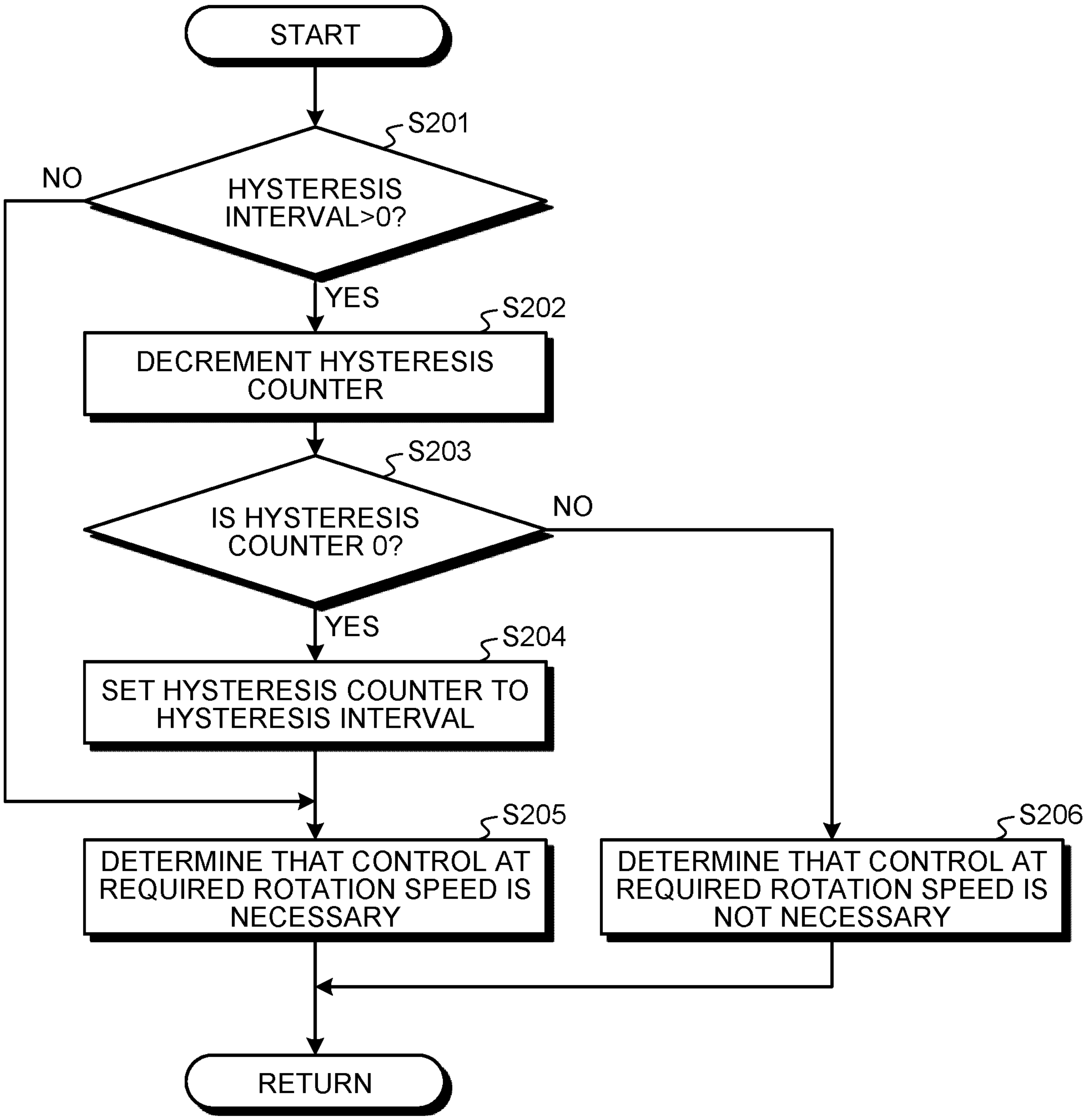
START
S201
HYSTERESIS INTERVAL>0?
NO
YES
S202
DECREMENT HYSTERESIS COUNTER
S203
IS HYSTERESIS COUNTER 0?
NO
YES
S204
SET HYSTERESIS COUNTER TO HYSTERESIS INTERVAL
S205
DETERMINE THAT CONTROL AT REQUIRED ROTATION SPEED IS NECESSARY
S206
DETERMINE THAT CONTROL AT REQUIRED ROTATION SPEED IS NOT NECESSARY
RETURN

FIG.16

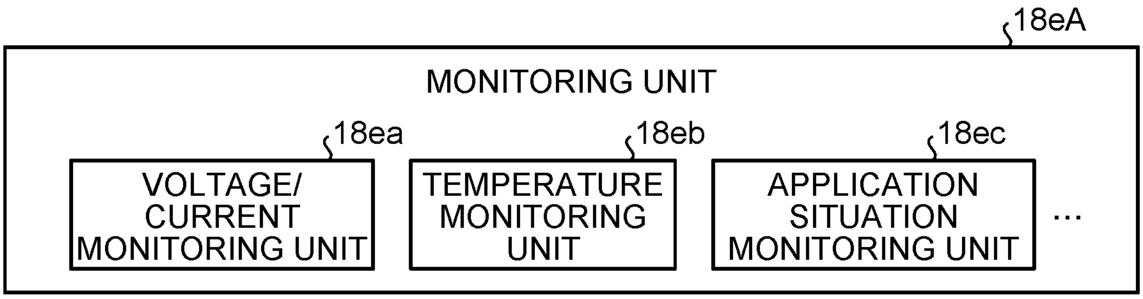


FIG.17

| APPLICATION SITUATION | FAN CONTROL PARAMETER |
|---|---|
| EXECUTION OF GAME APPLICATION | PARAMETER #1 |
| EXECUTION OF APPLICATION OTHER THAN GAME | PARAMETER #2 |
| SCREEN OFF | PARAMETER #3 |

FIG.18

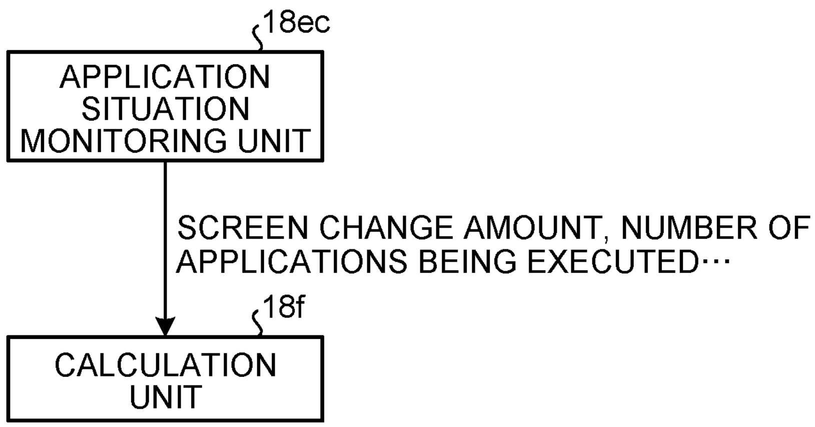
18ec
APPLICATION SITUATION MONITORING UNIT
SCREEN CHANGE AMOUNT, NUMBER OF APPLICATIONS BEING EXECUTED···
18f
CALCULATION UNIT

FIG.19

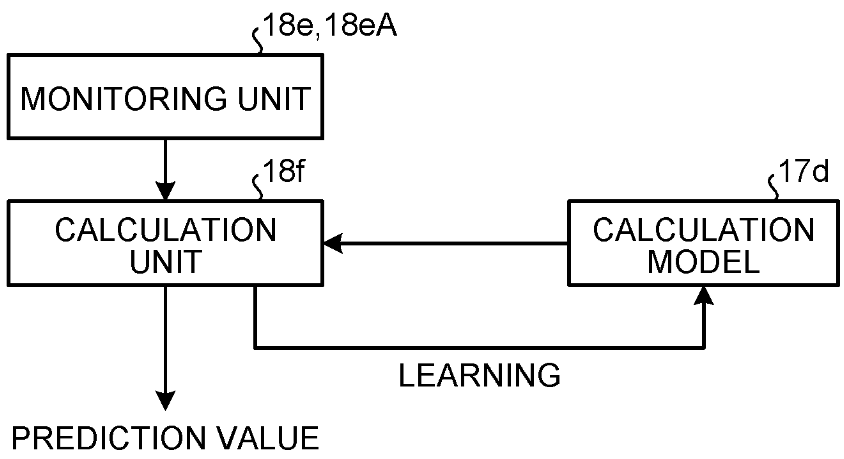
18e,18eA
MONITORING UNIT
18f
CALCULATION UNIT
17d
CALCULATION MODEL
LEARNING
PREDICTION VALUE

FIG.20

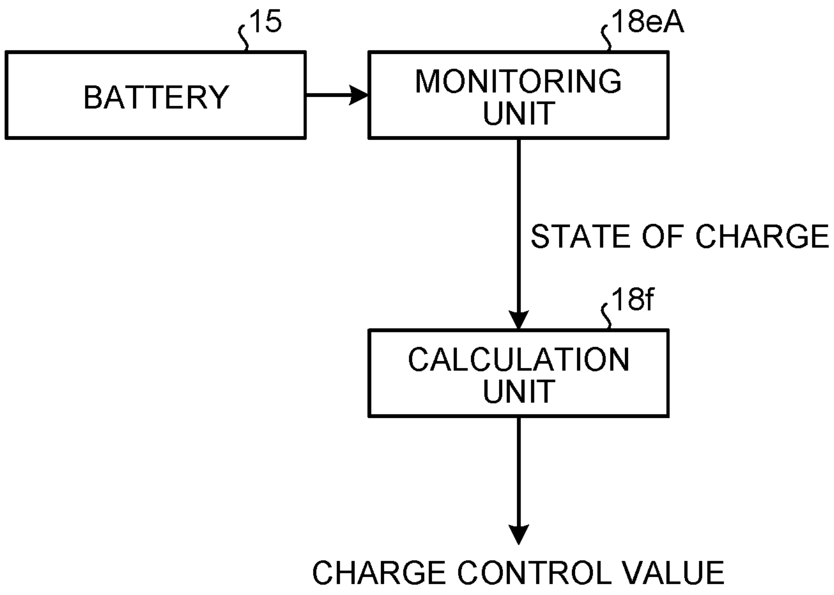
15
18eA
BATTERY
MONITORING UNIT
STATE OF CHARGE
18f
CALCULATION UNIT
CHARGE CONTROL VALUE

FIG.21

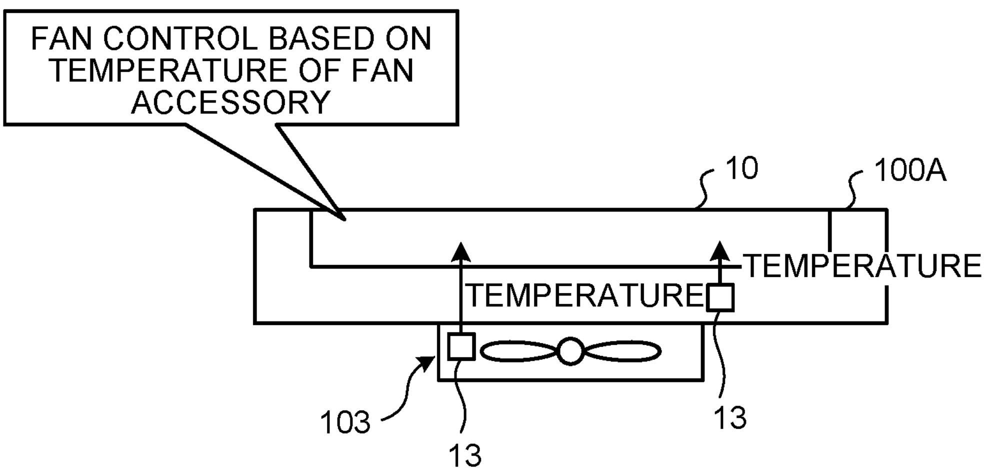
FAN CONTROL BASED ON TEMPERATURE OF FAN ACCESSORY
10
100A
TEMPERATURE
TEMPERATURE
103
13
13

FIG.22

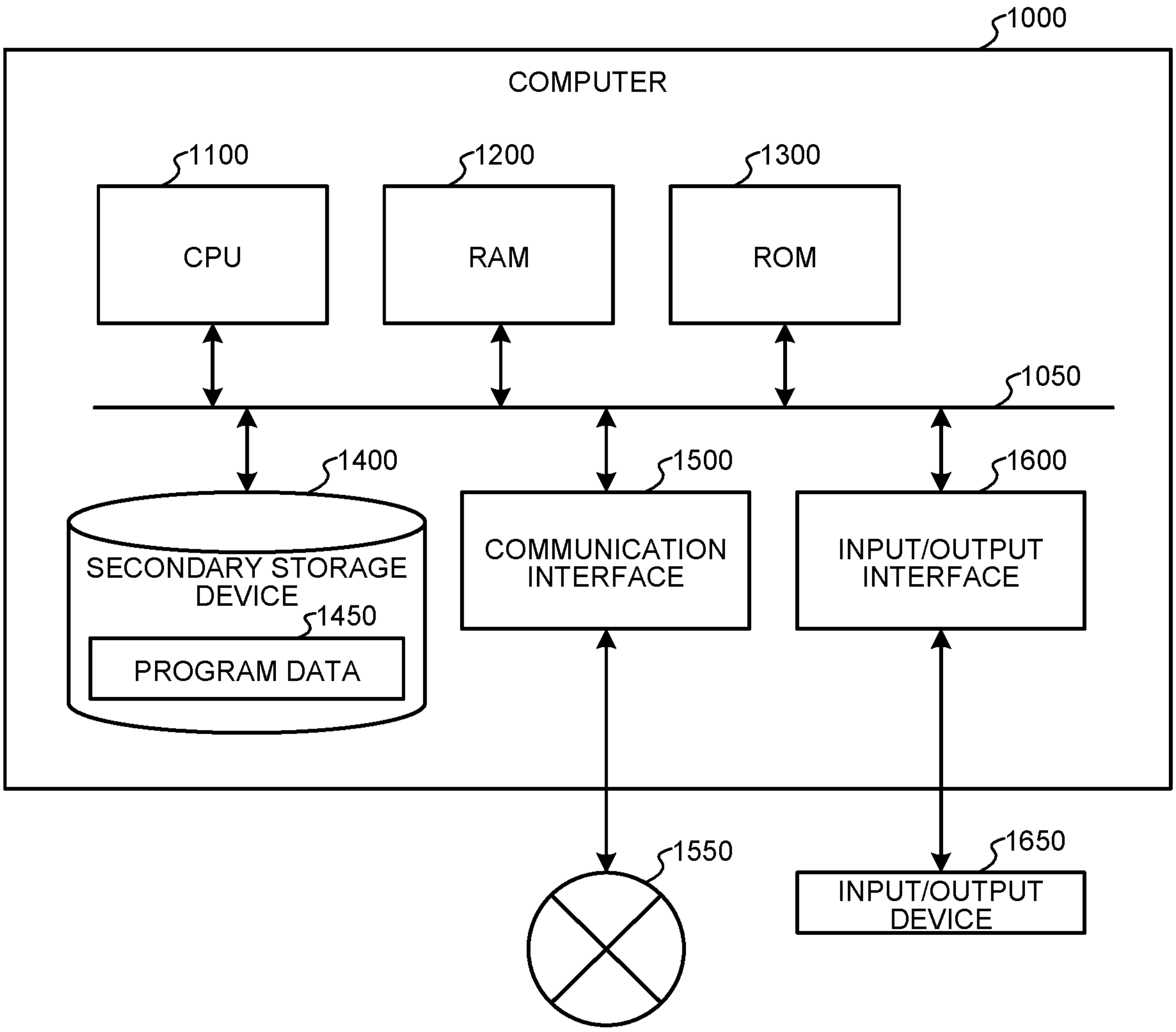
1000
COMPUTER
1100
CPU
1200
RAM
1300
ROM
1050
1400
SECONDARY STORAGE DEVICE
1450
PROGRAM DATA
1500
COMMUNICATION INTERFACE
1600
INPUT/OUTPUT INTERFACE
1550
1650
INPUT/OUTPUT DEVICE

## INTERNATIONAL SEARCH REPORT

International application No.
**PCT/JP2023/030638**

**A. CLASSIFICATION OF SUBJECT MATTER**

***G06F 1/20***(2006.01)i; ***G06F 1/16***(2006.01)i; ***H04M 1/72409***(2021.01)i; ***H04M 1/72454***(2021.01)i; ***H05K 7/20***(2006.01)i
FI: G06F1/20 D; G06F1/16 312G; G06F1/16 312M; G06F1/20 B; G06F1/20 C; H04M1/72409; H04M1/72454; H05K7/20 J

According to International Patent Classification (IPC) or to both national classification and IPC

**B. FIELDS SEARCHED**

Minimum documentation searched (classification system followed by classification symbols)

G06F1/20; G06F1/16; H04M1/72409; H04M1/72454; H05K7/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2013-168107 A (NEC COMPUTERTECHNO LTD) 29 August 2013 (2013-08-29)<br>paragraphs [0019]-[0035], [0060]-[0066], [0069], [0077], fig. 2-8 | 1, 17-18<br>2-16 |
| Y<br>A | JP 2014-131138 A (PIONEER ELECTRONIC CORP) 10 July 2014 (2014-07-10)<br>paragraphs [0017]-[0018], [0023]-[0036], [0069], [0077], fig. 1-2, 4 | 1-4, 8-10, 12-14, 16-18<br>5-7, 11, 15 |
| Y | JP 2007-88535 A (CASIO HITACHI MOBILE COMMUNICATIONS CO LTD) 05 April 2007 (2007-04-05)<br>paragraphs [0018]-[0025], [0028]-[0039], fig. 1-6 | 1-4, 8-10, 12-14, 16-18 |
| Y | US 2015/0118017 A1 (KABUSHIKI KAISHA TOSHIBA) 30 April 2015 (2015-04-30)<br>paragraphs [0027], [0029], fig. 4-6 | 8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 September 2023** | **10 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/030638**

| Patent document cited in search report | Publication date (day/month/year) | Patent family member(s) | Publication date (day/month/year) |
|---|---|---|---|
| JP 2013-168107 A | 29 August 2013 | (Family: none) | |
| JP 2014-131138 A | 10 July 2014 | (Family: none) | |
| JP 2007-88535 A | 05 April 2007 | (Family: none) | |
| US 2015/0118017 A1 | 30 April 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012227258 A